# EUROPÄISCHE PATENTSCHRIFT

(11) **EP 3 966 075 B1**
(45) Veröffentlichungstag und Bekanntmachung des Hinweises auf die Patenterteilung: **16.04.2025**
(21) Anmeldenummer: 20701747.6
(22) Anmeldetag: 23.01.2020
(51) Int. Cl.: B60R 21/02, A63G 7/00

(54) **FAHRGASTAUFNAHME SOWIE VERGNÜGUNGSFAHRGESCHÄFT MIT EINER SPERRVORRICHTUNG**
PASSENGER ACCOMMODATION AND AMUSEMENT RIDE HAVING A LOCKING DEVICE
PRISE EN CHARGE DE PASSAGERS ET MANÈGE D'ATTRACTION POURVU D'UN DISPOSITIF DE VERROUILLAGE

(30) Priorität: 09.05.2019 DE 102019112190
(43) Veröffentlichungstag der Anmeldung: 16.03.2022
(73) Patentinhaber: Mack Rides IP GmbH & Co. KG, 79183 Waldkirch (DE)
(72) Erfinder: WIEBECK, Dirk, 79235 Vogtsburg (DE); KRAUS, Michael, 79238 Ehrenkirchen (DE)
(74) Vertreter: Westphal, Mussgnug & Partner Patentanwälte mbB
(86) Internationale Anmeldenummer: PCT/EP2020/051622
(87) Internationale Veröffentlichungsnummer: WO 2020/224812

(56) Entgegenhaltungen:
- EP-A2- 1 964 598
- DE-B3- 102017 126 488
- FR-A1- 2 815 990
- US-A- 6 019 392
- US-A1- 2013 060 428

## Beschreibung

Die vorliegende Erfindung betrifft eine Fahrgastaufnahme mit den Merkmalen des Patentanspruchs 1 und ein Vergnügungsfahrgeschäft mit den Merkmalen des Patentanspruchs 14.

Sicherheitsbügel mit Sperrvorrichtungen sind aus dem Stand der Technik in unterschiedlichen Ausgestaltungen vorbekannt. Derartige Vergnügungsfahrgeschäfte sind beispielsweise Achterbahnen, bei denen die Fahrgäste starken Beschleunigungen ausgesetzt sind. Während der Fahrt mit einem Vergnügungsfahrgeschäft wird der Fahrgast durch einen Sicherheitsbügel in seiner Fahrgastaufnahme gehalten, wobei der Sicherheitsbügel über ein Verriegelungssystem arretiert ist. Gemäß Norm DIN EN 13814 wird je nach Beschleunigung die auf den Fahrgast wirkt, ein entsprechendes Verriegelungssystem vorgeschrieben.

Zum Ein- und Aussteigen aus der Fahrgastaufnahme werden die Sicherheitsbügel typischerweise durch Stelleinheiten um eine Drehachse verschwenkt. Dagegen ist der Sicherheitsbügel während der Fahrt mittels einer mechanischen Sperre derart verriegelt, dass dieser auch bei einem Ausfall der Stelleinheit in der geschlossenen Position verbleibt.

Nachteilig an dem Stand der Technik ist, dass die bekannten mechanischen Sperren aufgrund der stetigen Benutzung und Belastung starkem Verschleiß unterliegen und dadurch wartungsaufwändig sind. Auch sind mechanische Sperren mit zusätzlichem Gewicht verbunden, wodurch aufgrund höherer Fahrzeuggewichte ein größerer Energieaufwand zur Beschleunigung erforderlich ist.

Hydraulische Sperrvorrichtungen oder Stelleinheiten mit einem herkömmlichen hydraulischen Ventil zeigen nachteilhafter Weise bei hohen Druckdifferenzen eine Ventilleckage, wodurch die Sperr- oder Stellkraft der Sperrvorrichtungen oder Stelleinheiten verringert wird und ein erhöhter Wartungsbedarf besteht.

Weiteren Stand der Technik bilden die US 2013 / 0 060 428 A1, die eine magnetorheologische Vorrichtung für die Rückhaltung eines Sicherheitsgurtes zeigt, die US 6 019 392 und FR 2 815 990 A1 aus der eine Vorrichtung zum Stoppen einer Tür eines Fahrzeugs in einer Öffnungsposition vorbekannt ist.

Hier setzt die vorliegende Erfindung an.

Es ist daher die Aufgabe der vorliegenden Erfindung eine verbesserte Fahrgastaufnahme mit einer Sperrvorrichtung eines Sicherheitsbügels vorzuschlagen, die in zweckmäßiger Weise die aus dem Stand der Technik bekannten Sperrvorrichtungen verbessert und einerseits ausfallsicher und darüber hinaus unanfällig gegenüber Leckage und Verschleiß ist.

Diese Aufgaben werden erfindungsgemäß mit einer Fahrgastaufnahme gemäß Patentanspruch 1 sowie durch ein Vergnügungsfahrgeschäft mit den Merkmalen des Patentanspruchs 14 gelöst.

Weitere vorteilhafte Ausgestaltungen der vorliegenden Erfindung werden in den Unteransprüchen angegeben.

Die Fahrgastaufname mit den Merkmalen des Patentanspruchs 1 weist einen Sicherheitsbügel mit einer Sperrvorrichtung, wobei die Sperrvorrichtung des Sicherheitsbügels einen Flüssigkeitskanal mit einer magnetorheologischen Flüssigkeit, ein bewegliches Sperrglied und eine Magneteinrichtung aufweist, und wobei das Sperrglied bei einer Bewegung die Flüssigkeit durch den Flüssigkeitskanal zwingt.

Das Sperrglied steht demnach mit der magnetorheologischen Flüssigkeit in einer kinematischen Wirkverbindung und ist somit mit der magnetorheologischen Flüssigkeit hydraulisch gekoppelt und kann eine Bewegung oder Schwenkbewegung des Sicherheitsbügels auf die magnetorheologische Flüssigkeit in dem Flüssigkeitskanal übertragen. Darüber hinaus weist der Flüssigkeitskanal zumindest einen Kanalabschnitt auf, wobei die Magneteinrichtung zumindest auf zwei gegenüberliegenden Seitenwänden des Kanalabschnitts derart angeordnet ist, dass die magnetischen Feldlinien des magnetischen Feldes der Magneteinrichtung den Kanalabschnitt durchqueren können. Bevorzugt durchqueren die magnetischen Feldlinien des Magnetfeldes der Magneteinrichtung den Kanalabschnitt quer zu einer Fließrichtung, wobei einerseits naturgegeben durch die Krümmung der Feldlinien als auch in Form einer bevorzugten Weiterbildung - wie später noch detailliert erläutert wird - die Feldlinien gezielt geneigt oder gekrümmt zu der Fließrichung in dem Kanalabschnitt ausgerichtet sein können. Die magnetorheologische Flüssigkeit wird in dem magnetischen Feld der Magneteinrichtung polarisiert, wodurch sich die Partikel der magnetorheologischen Flüssigkeit in dem Magnetfeld der Magneteinrichtung entlang der Feldlinien - also quer zur Fließrichtung - ausrichten bzw. polarisiert werden. Dadurch wird die Viskosität der magnetorheologischen Flüssigkeit in dem Kanalabschnitt bevorzugt bis hin zu einer druckfesten Verfestigung erhöht und der Flüssigkeitskanal und somit der Sicherheitsbügel gesperrt bzw. eine Bewegung des Sicherheitsbügels stark gedämpft wird.

Hier und im Folgenden wird unter einem Flüssigkeitskanal ein offenes oder geschlossenes System verstanden, das die Flüssigkeit - möglichst leckagefrei - zwangsführt. Der Flüssigkeitskanal kann vorzugsweise einen geschlossenen Kreis, also einen Flüssigkeitskreislauf bilden oder ein System mit mindestens einem ersten Ende und mindestens einem zweiten Ende bilden, wobei zwischen dem mindestens einen ersten Ende und dem mindestens einen zweiten Ende wenigstens eine Verbindung besteht, durch die das Fluid von dem mindestens einen ersten Ende zu dem mindestens einen zweiten Ende strömen kann.

Die Erfindung sieht vor, dass die Magneteinrichtung einen ersten Zustand und einen zweiten Zustand aufweist, wobei in dem ersten Zustand die magnetischen Feldlinien den Kanalabschnitt durchqueren und wobei in dem zweiten Zustand die Feldlinien von dem Kanalabschnitt abgelenkt, bzw. umgelenkt werden oder in dem Kanalabschnitt geschwächt werden. Der zweite Zustand entspricht somit dem Zustand, in dem das Magnetfeld der Magneteinrichtung in dem Kanalabschnitt abgeschwächt bzw. minimiert wird, wodurch die Viskosität der magnetorheologischen Flüssigkeit im Wesentlichen unverändert bleibt und die magnetorheologische Flüssigkeit näherungsweise ungestört den Kanalabschnitt durch die Magneteinrichtung in der Fließrichtung durchfließen bzw. durchströmen kann. Der Sicherheitsbügel ist in dem zweiten Zustand freigegeben und kann bewegt bzw. verschwenkt werden.

Eine weitere vorteilhafte Ausgestaltung der vorliegenden Erfindung sieht vor, dass die Magneteinrichtung den Kanalabschnitt zumindest abschnittsweise umgibt. Besonders ist es bevorzugt, wenn der Kanalabschnitt einen kreisrunden Querschnitt aufweist, so dass die Magneteinrichtung rotationssymmetrisch, insbesondere vollständig rotationssymmetrisch, um den Kanalabschnitt angeordnet ist. Insbesondere ist es bevorzugt, wenn die Magneteinrichtung im Umfang in mindestens zwei Bereiche unterteilt werden kann, wobei der erste Bereich einen Nordpol und der zweite Bereich einen Südpol bilden kann. Dementsprechend fließt der magnetische Fluss entlang der Feldlinien von dem Nordpol zum Südpol und durchquert dabei den Kanalabschnitt des Flüssigkeitskanals.

Eine weitere vorteilhafte Ausgestaltung der vorliegenden Erfindung sieht vor, dass die Magneteinrichtung mechanisch und/oder elektrisch schalt- bzw. betätigbar ist. Mechanisch kann das Magnetfeld der Magneteinrichtung, beispielsweise durch ein Umlenken des magnetischen Flusses mittels flussführender Bauteile abgeschwächt werden und/oder durch das mechanische Einbringen eines hartmagnetischen Gegenstandes abgeschwächt werden. Ein schaltbarer Elektromagnet kann ebenfalls vorgesehen werden, der entweder das magnetische Feld der Magneteinrichtung erzeugt und/oder das magnetische Feld der Magneteinrichtung abschwächt.

Es ist erfindungsgemäß, wenn die Magneteinrichtung mindestens einen Permanentmagneten aufweist. Bevorzugt kann die Magneteinrichtung aus einer Mehrzahl von Permanentmagneten, insbesondere Neodym-Magneten, gebildet werden, welche sich einfach und kostengünstig auf den mindestens zwei gegenüberliegenden Seitenwänden des Kanalabschnitts des Flüssigkeitskanals anordnen lassen.

Es hat sich als besonders vorteilhaft erwiesen, wenn die Magneteinrichtung mindestens einen Elektromagneten umfasst.

Nach Maßgabe einer weiteren vorteilhaften Ausgestaltung der vorliegenden Erfindung weist der Kanalabschnitt mindestens eine Drossel auf, durch die der Kanalabschnitt des Flüssigkeitskanals einen lokal reduziert Querschnitt aufweist. Besonders bevorzugt ist es, wenn der Querschnitt durch die Drossel höchstens 1/2, weiter bevorzugt 1/4, noch weiter bevorzugt 1/8 ebenfalls weiter bevorzugt 1/16 und noch weiter bevorzugt nicht mehr als 1/32 der Querschnittsfläche des Kanalabschnitt jenseits der Drossel beträgt. Durch die lokale Reduzierung des durchströmten Querschnittes in der Drossel können die polarisierten Partikel der magnetorheologischen Flüssigkeit den Kanalabschnitt "verstopfen" und diesen auch gegen große Drücke versperren.

Gemäß einer weiteren Ausgestaltung der vorliegenden Erfindung kann die mindestens eine Drossel eine Kaskade, eine Kulisse, ein Lochblech, eine Waben-, Sieb- und/oder Gitterstruktur aufweisen. Insbesondere ist es bevorzugt, wenn die Drossel eine Kaskade aufweist, durch die einerseits der durchströmte Querschnitt erheblich verringert wird und andererseits aufgrund von Umlenkungen die effektive Länge des Kanalabschnitts in Fließrichtung verlängert wird. Die Kaskade kann eine beliebige Form aufweisen, beispielsweise eine Zick-Zack-Form oder mäanderförmig verlaufen. Die Kaskade vergrößert die Sperrwirkung der polarisierten Partikel der magnetorheologischen Flüssigkeit und der Flüssigkeitskanal kann gegen große Druckkräfte wirksam versperrt werden.

Die Kaskade oder Kulisse kann weiterhin bevorzugt aus mehreren Umlenkprofilen gebildet werden, welche abwechselnd von den mindestens zwei gegenüberliegenden Seitenwänden in den Kanalabschnitt ragen können. Die Umlenkbleche können aus einem magnetisierbaren oder nicht-magnetisierbaren Werkstoff hergestellt werden, wobei die Umlenkplatten besonders bevorzugt aus einem magnetisierbaren Werkstoff hergestellt sind, wodurch die Feldlinien besonders effektiv zwischen den mindestens zwei gegenüberliegenden Seitenwänden ausgerichtet werden.

Ein Lochblech, eine Waben-, Sieb- oder Gitterstruktur unterteilt den Kanalabschnitt in eine Vielzahl von Einzelkanälen, die besonders gut von den polarisierten Partikeln der magnetorheologischen Flüssigkeit versperrt werden können. Das Lochblech, die Waben-, Sieb- und/oder Gitterstrukturen können ebenfalls aus einem magnetisierbaren oder nicht-magnetisierbaren Werkstoff hergestellt sein, wobei es in diesem Fall besonders bevorzugt ist, wenn die oben genannten Strukturen aus einem nicht-magnetisierbaren Werkstoff, bevorzugt einem Leichtmetall, hergestellt sind.

Gemäß einer weiteren Ausgestaltung der vorliegenden Erfindung kann es vorgesehen sein, wenn der Kanalabschnitt einen Kegelabschnitt in Form eines Diffusors oder einer Düse aufweist. Während ein Diffusor zu einer Verzögerung der Strömung in dem Kanalabschnitt führt, beschleunigt die Düse die Strömung in dem Kanalabschnitt. Ein als Diffusor ausgebildeter Kanalabschnitt entspricht im vorliegenden Fall einer Aufweitung des durchströmten Querschnitts und die Düse entspricht einer Verjüngung des durchströmten Querschnittes quer zu der Fließrichtung. Die Feldlinien der Magneteinrichtung können in dem Diffusor oder in der Düse möglichst exakt senkrecht zu der Fließrichtung ausgerichtet sein. Bei einer Verzögerung in dem Diffusor steigt der statische Druck, währenddessen in der Düse aufgrund einer Beschleunigung der statische Druck sinkt. Durch den Diffusor oder durch die Düse kann ein Einweg- oder Rückschlagventil realisiert werden, wodurch der Kanalabschnitt - in Anwesenheit des magnetischen Feldes in eine erste Fließrichtung gesperrt wird und in eine zweite Fließrichtung ein Durchfließen ermöglicht. Die erste Fließrichtung entspricht dabei der Fließrichtung, die in Richtung der Verjüngung des Kegelabschnitts zeigt.

Weiterhin hat es sich als vorteilhaft erwiesen, wenn in Fließrichtung vor und/oder hinter dem Kanalabschnitt ein Kegelabschnitt in Form eines Diffusors und/oder in Form einer Düse angeordnet ist. Durch die Düse und/oder den Diffusor kann besonders bevorzugt der Querschnitt in dem Flüssigkeitskanal vor dem Eintritt in den Kanalabschnitt reduziert werden, wodurch der durchströmte Querschnitt klein ist. Die durch das Magnetfeld erzeugten Verfestigungen in dem Kanalquerschnitt können den Flüssigkeitskanal auch gegen große Druckdifferenzen sperren.

Auch hat es sich als vorteilhaft erwiesen, wenn das Sperrglied einen Kolben umfasst, wobei der Kolben bevorzugt ausgebildet ist, eine lineare Bewegung vorzunehmen. Der Kolben kann mittels einer Kolbenstange mit dem Sicherheitsbügel gekoppelt bzw. verbunden werden. Weiterhin ist es bevorzugt, wenn der Flüssigkeitskanal einen zylindrischen Druckraum aufweist, in dem der Kolben angeordnet ist. Der Kolben weist eine erste Druckseite und eine zweite Druckseite auf und teilt den Druckraum des Zylinders in zwei Bereiche, nämlich einen ersten Bereich und einen zweiten Bereich, wobei in Abhängigkeit von der Belastung des Kolbens einer der Bereiche eine Druckseite und der andere Bereich eine Saugseite bildet. Der erste Bereich und der zweite Bereich des Druckraums des Zylinders sind mittels einer Kolbendichtung vorzugsweise leckagefrei getrennt. Der erste Bereich und der zweite Bereich sind mittels des Flüssigkeitskanals miteinander verbunden, so dass die in dem Druckraum eingeschlossene magnetorheologische Flüssigkeit bei einer Bewegung des Sperrglieds durch den Flüssigkeitskanal von dem ersten Bereich, der Druckseite, in den zweiten Bereich, der Saugseite, fließen kann.

Ein herkömmliches hydraulisches Ventil kann darüber hinaus in dem Flüssigkeitskanal angeordnet sein. Das Ventil kann zusätzlich den Flüssigkeitskanal sichern und mechanisch die Verbindung zwischen den beiden Druckseiten des Kolbens sperren. Weiterhin kann der Kanalabschnitt derart zu dem hydraulischen Ventil in dem Flüssigkeitskanal angeordnet sein, dass in dem Kanalabschnitt der Druck soweit gesenkt wird, dass auch bei extrem hohen Drücken die Druckbeaufschlagung des hydraulischen Ventils gesenkt ist und Leckagen verhindert werden.

Darüber hinaus hat es sich als vorteilhaft erwiesen, wenn der Flüssigkeitskanal ein Zirkularkanal ist, wobei der Zirkularkanal zwischen einer kreisrunden, bevorzugt kreiszylindrischen Innenwelle, die die erste Seitenwand bildet, und einer kreisrunden, bevorzugt hohlzylindrischen Außenwelle angeordnet ist, die die gegenüberliegende zweite Seitenwand bildet. Die Innenwelle, die Außenwelle und der Zirkularkanal können koaxial zu einer Längsachse angeordnet sein. Weiterhin kann die Magneteinrichtung derart angeordnet sein, dass die Feldlinien im Wesentlichen radial verlaufen und den Zirkularkanal durchqueren. Die Innenwelle bildet bevorzugt das Sperrglied und ist relativ zu der Außenwelle um die Längsachse verdrehbar. Bei einer Bewegung des Sperrgliedes bzw. des Sicherheitsbügels wird die Bewegung auf die magnetorheologische Flüssigkeit in dem Zirkularkanal bzw. durch den Flüssigkeitskanal übertragen und die magnetorheologische Flüssigkeit wird in eine Fließbewegung gezwungen.

Es hat sich als vorteilhaft erwiesen, wenn in dem Flüssigkeitskanal mindestens ein Wälzkörper angeordnet ist. Der Wälzkörper steht sowohl mit der Innenwelle aus auch mit der Außenwelle in Wirkkontakt und wird in eine Wälzbewegung bei einer Verdrehung der Innenwelle relativ zur Außenwelle gezwungen. Besonders bevorzugt ist es, wenn der Flüssigkeitskanal als Zirkularkanal mit einer konstanten Breite ausgebildet ist, wodurch eine Art Rollenlager gebildet wird. Die Feldlinien des Magnetfeldes der Magneteinrichtung polarisieren die Partikel der magnetorheologischen Flüssigkeit und richten diese bevorzugt radial in dem Zirkularkanal aus. Aufgrund einer Keilwirkung sperren die polarisierten Partikel eine Wälzbewegung der Wälzkörper und eine Verdrehung des Sperrgliedes wird blockiert. Bei einer Umlenkung oder Abschwächung des magnetischen Flusses bzw. der Feldlinien in dem Zirkularkanal werden die Wälzkörper bzw. das als Innenwelle ausgebildete Stellglied freigegeben und die Innenwelle kann gegenüber der Außenwelle verdreht werden.

Nach Maßgabe einer weiteren Ausgestaltung der vorliegenden Erfindung ist die Innenwelle exzentrisch innerhalb der Außenwelle gelagert, wodurch der Zirkularkanal über den Umfang keinen konstanten Kanalquerschnitt aufweist. Die Innenwelle bildet das Sperrglied und ist nach Art einer Exzenterscheibenpumpe innerhalb der Außenwelle angeordnet und bildet an einer Umfangsposition eine Engstelle aus, welche zusammen mit einer Drehung der Innenwelle zum Verdrängen der magnetorheologischen Flüssigkeit um die Längsachse der Innenwelle bewegt ist. Die polarisierten Partikel der magnetorheologischen Flüssigkeit bilden entlang der Feldlinien des magnetischen Feldes der Magneteinrichtung kettenförmige Strukturen aus, welche durch die Keilwirkung der Engstelle die Relativposition zwischen der Innenwelle und der Außenwelle sperren und somit den Sicherheitsbügel blockieren.

Eine weitere vorteilhafte Ausgestaltung der vorliegenden Erfindung sieht vor, dass der Flüssigkeitskanal ein Fördermittel aufweist, durch das die magnetorheologische Flüssigkeit in dem Flüssigkeitskanal druckbeaufschlagt werden kann oder den Flüssigkeitskanal durchströmen kann. Das Fördermittel ist bevorzugt eine Pumpe, die eingerichtet ist den Druck in dem Flüssigkeitskanal einzustellen und aufrechtzuerhalten und ggf. eine Durchströmung in dem Flüssigkeitskanal einzustellen, um das bewegliche Sperrglied zuzustellen.

Es ist erfindungsgemäß, wenn der Flüssigkeitskanal mindestens eine Druckausgleichseinrichtung aufweist, durch die der Druck in dem Flüssigkeitskanal aufrecht gehalten wird und Druckschwankungen, beispielsweise aufgrund von Volumenänderungen oder Temperaturschwankungen ausgeglichen werden können. Besonders ist es vorteilhaft, wenn die Druckausgleichseinrichtung einen mit dem Flüssigkeitskanal verbundenen Ausgleichsspeicher aufweist, in dem anteilig die magnetorheologische Flüssigkeit bevorratet ist und ein Druckmittel. Das Druckmittel kann bevorzugt ein kompressibles Gas, insbesondere Stickstoff oder ein Stickstoffgemisch, sein. Dadurch ist sichergestellt, dass in dem Flüssigkeitskanal bei unterschiedlichen Umgebungsbedingungen stets ein im Wesentlichen konstanter Druck aufrechterhalten wird.

Die Druckausgleichseinrichtung kann weiter bevorzugt ein Energiespeicher sein. Beim Schließen des Sicherheitsbügels wird der Energiespeicher bedingt durch die unterschiedlichen Volumina in dem ersten Bereich und in dem zweiten Bereich des Druckraums - aufgrund der Kolbenstange in dem zweiten Bereich - geladen. Demnach steigt beim Schließen des Sicherheitsbügels der Druck in der magnetorheologischen Flüssigkeit an und diese gespeicherte Energie kann im zweiten Zustand der Magneteinrichtung zum Öffnen des Sicherheitsbügels verwendet werden.

Die magnetorheologische Flüssigkeit beinhaltet bevorzugt polarisierbare Partikel, insbesondere Carbonyleisenpulver, und eine Suspension, insbesondere ein Mineralöl, ein synthetisches Öl, Ethylenglycol oder Wasser, wobei die oben genannte Auflistung der Inhaltsstoffe der magnetorheologischen Flüssigkeit nicht abschließend ist. Vielmehr können alle polarisierbaren Partikel und sämtliche Suspensionen zur Anwendung kommen. Die oben genannten Kombinationen stellen lediglich eine beispielhafte und bevorzugte Kombination dar.

Nachfolgend werden unter Bezugnahme auf die begleitende Zeichnung zwei Ausführungsbeispiele einer erfindungsgemäßen Sperrvorrichtung sowie Weiterbildungen hiervon im Detail beschrieben. Es zeigen:
- Figur 1: eine Fahrgastaufnahme eines Vergnügungsfahrgeschäfts mit einem Sicherheitsbügel, wobei der Sicherheitsbügel durch eine erfindungsgemäße Sperrvorrichtung gesperrt werden kann,
- Figur 2: eine vergrößerte Darstellung der Sperrvorrichtung eines Sicherheitsbügels gemäß Figur 1, aufweisend einen Flüssigkeitskanal mit einer magnetorheologischen Flüssigkeit, einem als Kolben ausgebildeten beweglichen Sperrglied und mit einer Magneteinrichtung, wobei die Magneteinrichtung zumindest um einen Kanalabschnitt des Flüssigkeitskanals angeordnet ist und wobei die Feldlinien der Magneteinrichtung den Kanalabschnitt derart durchqueren, dass die magnetorheologische Flüssigkeit in dem Kanalabschnitt zum Versperren des Kanalabschnitts quer zur Fließrichtung polarisiert werden kann,
- Figur 3: eine Weiterbildung des ersten Ausführungsbeispiels gemäß Figur 1 oder 2, wobei eine Druckausgleichseinrichtung vorgesehen ist, durch welche der Druck in dem Flüssigkeitskanal konstant gehalten werden kann,

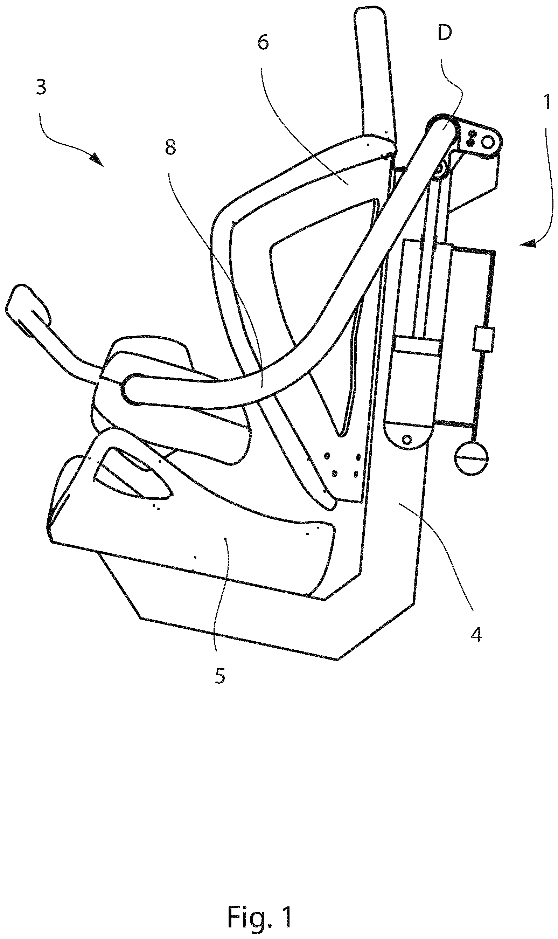

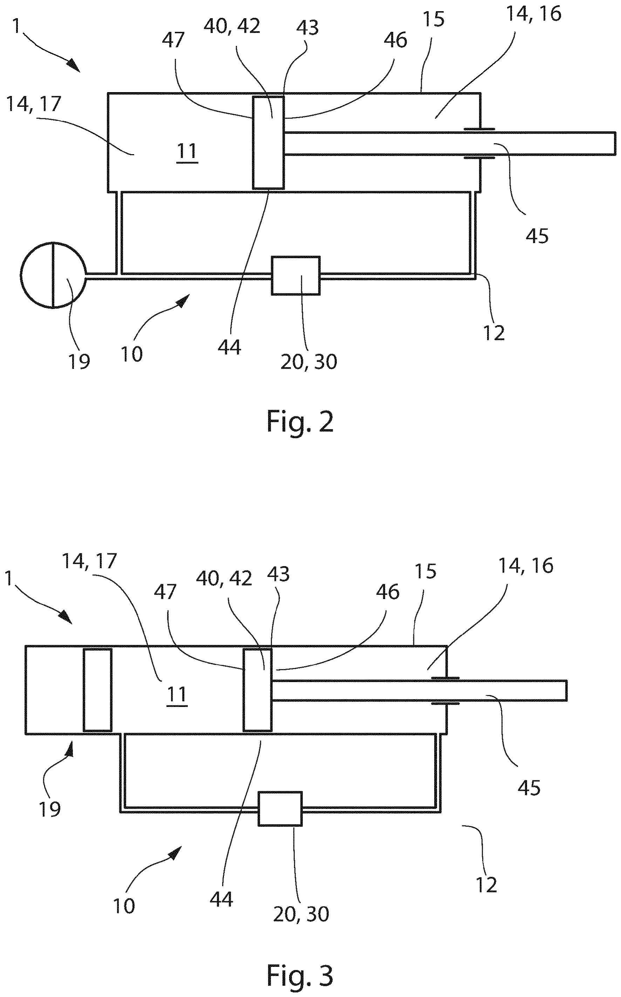

- Figur 3: eine Weiterbildung des ersten Ausführungsbeispiels gemäß Figur 1 oder 2, wobei eine Druckausgleichseinrichtung vorgesehen ist, durch welche der Druck in dem Flüssigkeitskanal konstant gehalten werden kann,

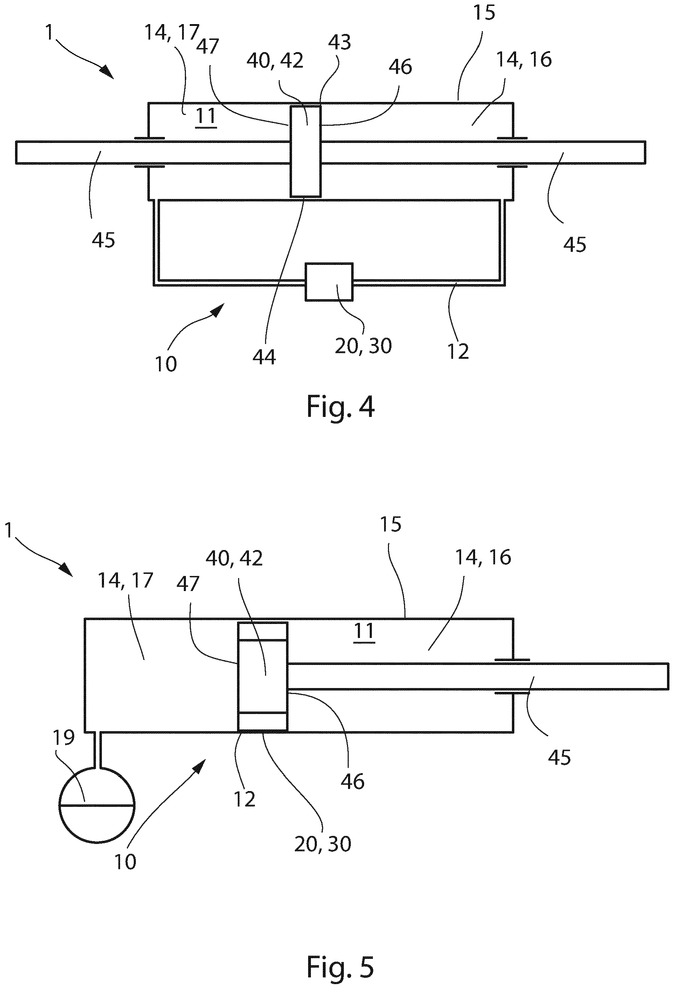

- Figur 4: eine zweite Weiterbildung des ersten Ausführungsbeispiels gemäß Figur 1 oder 2,
- Figur 5: eine dritte Weiterbildung des ersten Ausführungsbeispiels gemäß Figur 1 oder 2,

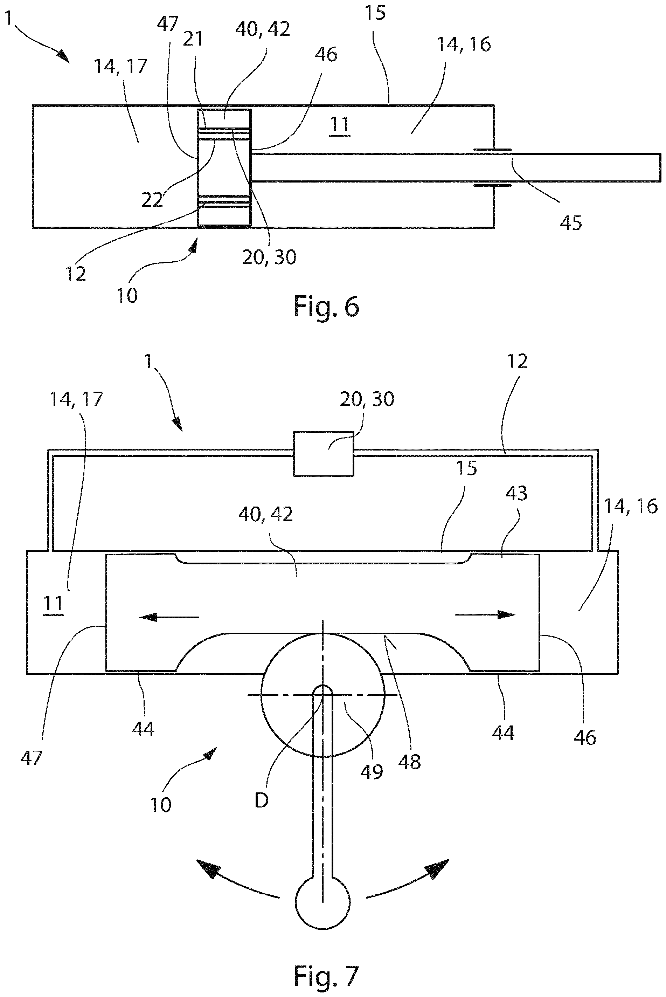

- Figur 6: eine vierte Weiterbildung des ersten Ausführungsbeispiels gemäß Figur 1 oder 2,
- Figur 7: eine fünfte Weiterbildung des ersten Ausführungsbeispiels gemäß Figur 1 oder 2,

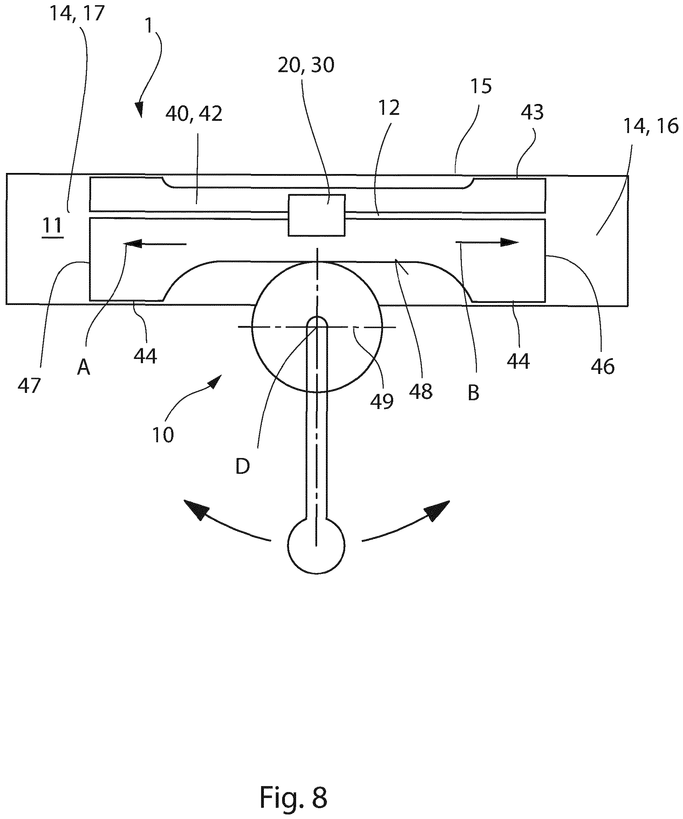

- Figur 8: eine sechste Weiterbildung des ersten Ausführungsbeispiels gemäß Figur 1 oder 2,

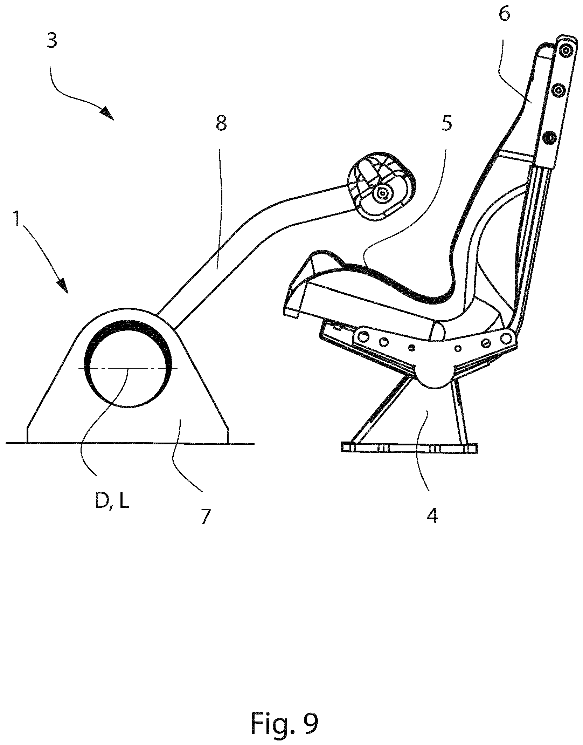

- Figur 9: eine Fahrgastaufnahme des Vergnügungsfahrgeschäfts mit einem Sicherheitsbügel und einer Sperrvorrichtung gemäß eines zweiten Ausführungsbeispiels, wobei der Flüssigkeitskanal als Zirkularkanal zwischen einer Innenwelle und einer Außenwelle angeordnet ist,

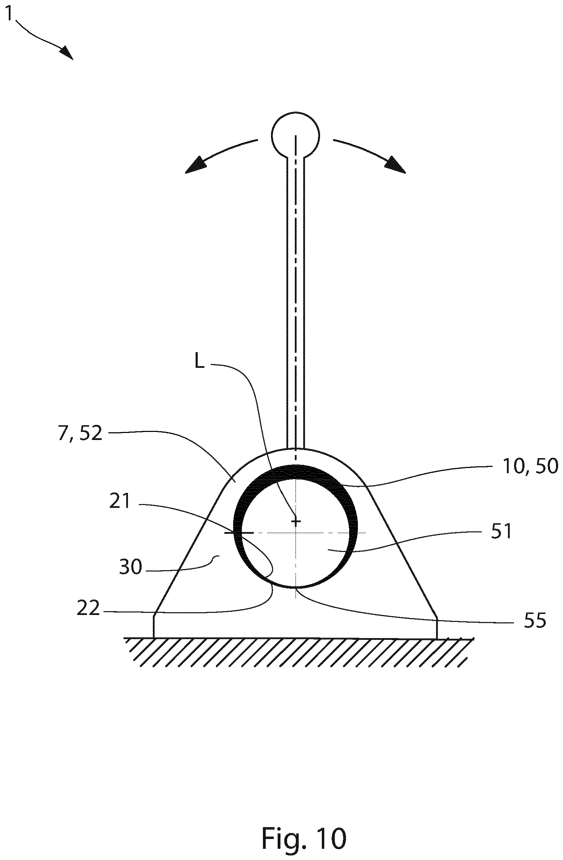

- Figur 10: eine Detaildarstellung der Sperrvorrichtung gemäß Figur 9, wobei die Innenwelle exzentrisch zu der Außenwelle angeordnet ist,

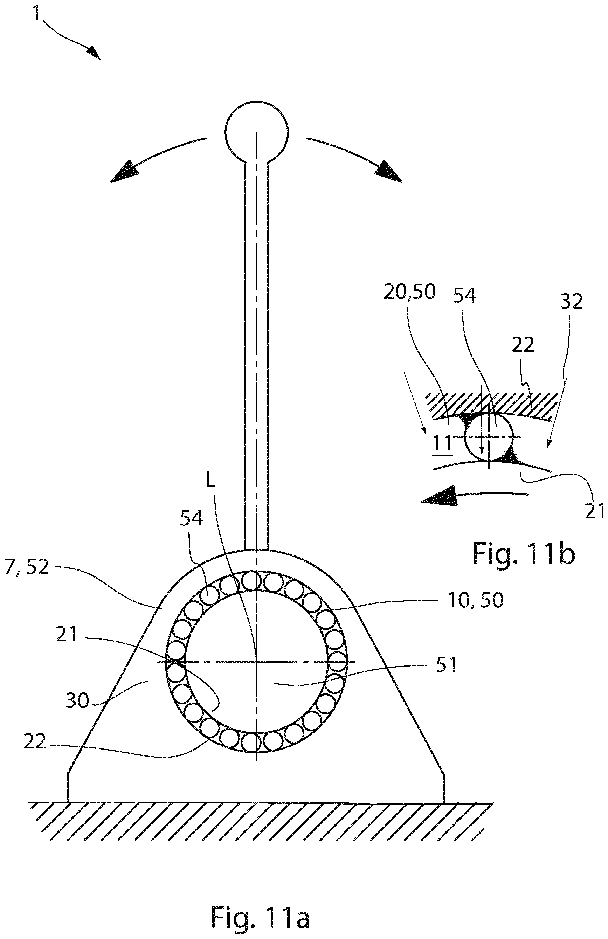

- Figur 11a: eine erste Weiterbildung des zweiten Ausführungsbeispiels gemäß Figur 9 oder 10,
- Figur 11b: eine Detaildarstellung gemäß Figur 11a,

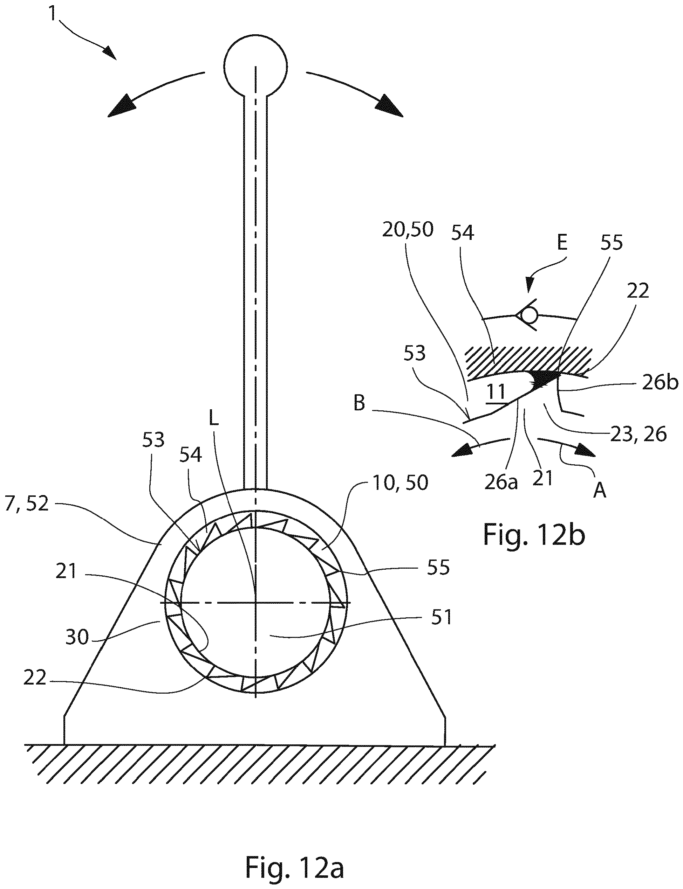

- Figur 12a: eine zweite Weiterbildung des zweiten Ausführungsbeispiels gemäß Figur 9 oder 10,
- Figur 12b: eine Detaildarstellung gemäß Figur 12a,

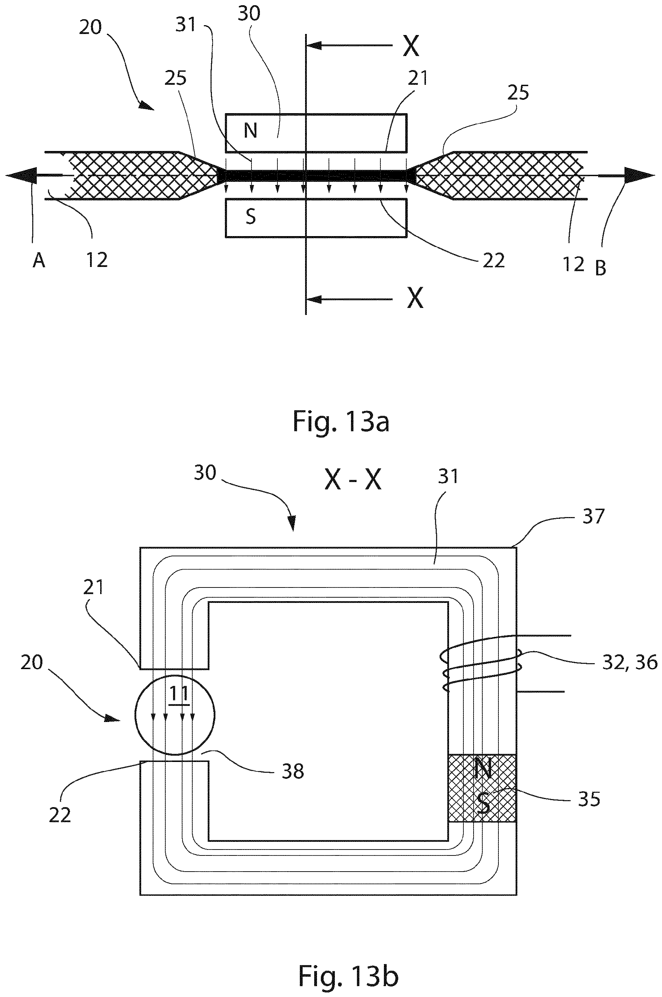

- Figur 13a: eine vergrößerte und stark vereinfachte schematische Darstellung einer Ausgestaltung des Kanalabschnitts mit der Magneteinrichtung,
- Figur 13b: eine schematische Schnittdarstellung des Kanalabschnitts entlang der Schnittlinie X-X gemäß Figur 13a,

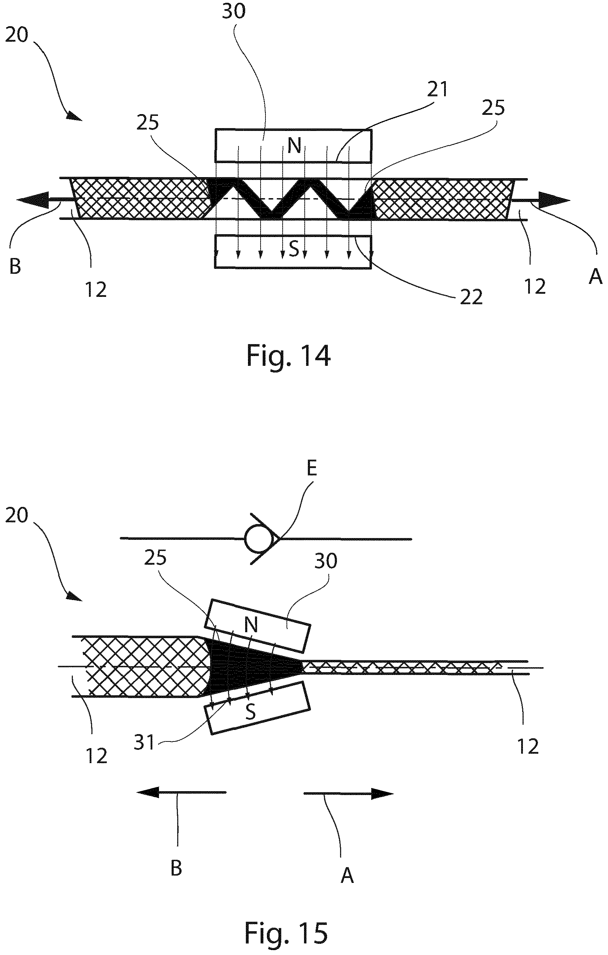

- Figur 14: eine vergrößerte und stark vereinfachte schematische Darstellung einer zweiten Ausgestaltung des Kanalabschnitts mit der Magneteinrichtung,
- Figur 15: eine vergrößerte und stark vereinfachte schematische Darstellung einer dritten Ausgestaltung des Kanalabschnitts mit der Magneteinrichtung, wobei der Kanalabschnitt einen Kegelabschnitt aufweist und nach Art eines Rückschlagventils ausgebildet ist,

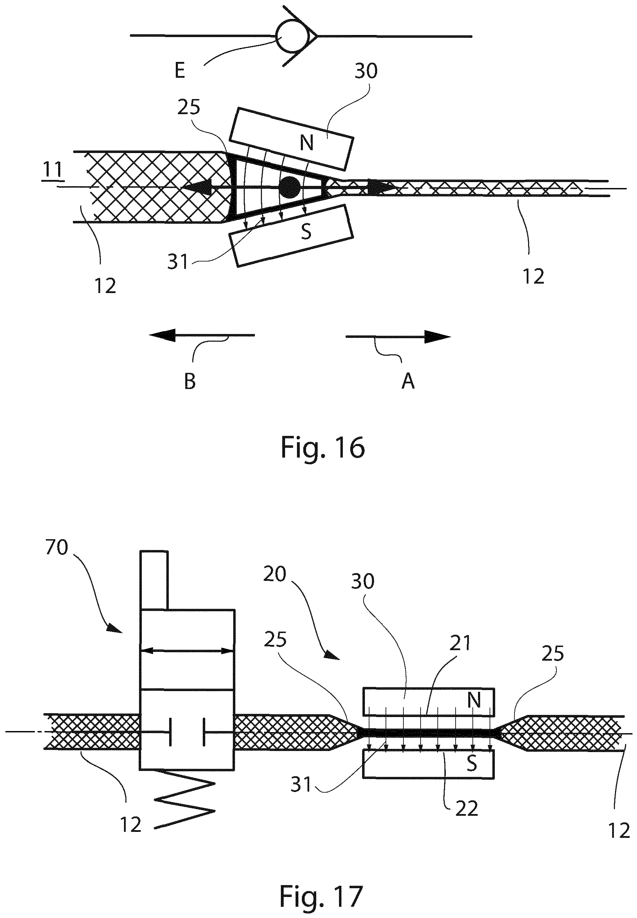

- Figur 16: eine vergrößerte und stark vereinfachte schematische Darstellung einer vierte Ausgestaltung des Kanalabschnitts mit der Magneteinrichtung, und
- Figur 17: eine vergrößerte und stark vereinfachte schematische Darstellung des Kanalabschnitt gemäß Figur 13a, wobei in zusätzliches Hydraulikventil vorgesehen ist.

Nachfolgend werden gleiche oder funktional gleiche Bauteile mit gleichen Bezugszeichen gekennzeichnet. Gleiche Merkmale der einzelnen Ausführungsbeispiele sowie deren Weiterbildungen können miteinander kombiniert werden und sind nicht auf das jeweilige Ausführungsbeispiel beschränkt.

Figur 1 ist eine Fahrgastaufnahme 3 eines nur ausschnittsweise dargestellten Vergnügungsfahrgeschäfts 2 zu entnehmen, aufweisend eine Sitzaufnahme 4, ein Sitzpolster 5, ein Rückenpolster 6 und ein Sicherheitsbügel 8, der um eine Drehachse verschwenk- bzw. verdrehbar an der Sitzaufnahme 4 angeordnet gehalten ist. Der Sicherheitsbügel 8 kann von einer (nicht dargestellten) geöffneten Stellung in eine geschlossene Stellung bewegt werden, um einen (nicht dargestellten) Fahrgast während der Fahrt mit dem Vergnügungsfahrgeschäft 2 sicher in der Fahrgastaufnahme 3 zu halten. Der Sicherheitsbügel 8 kann manuell oder durch entsprechende Stelleinheiten von der geöffneten Stellung in die geschlossene Stellung und umgekehrt bewegt werden und weist darüber hinaus ein Verriegelungssystem als Primärsicherung auf wodurch der Sicherheitsbügel 8 während der Fahrt in der geschlossenen Stellung gehalten wird. Für den Fall, dass die Stelleinheiten oder die Primärsicherung des Sicherheitsbügels 8 versagt, ist eine Sperrvorrichtung 1 als Sekundärsicherung vorgesehen, durch die der Sicherheitsbügel 8 in der geschlossenen Stellung gehalten wird.

Figur 2 zeigt eine vergrößerte Darstellung der erfindungsgemäßen Sperrvorrichtung 1 eines Sicherheitsbügels 8 gemäß Figur 1, aufweisend einen Flüssigkeitskanal 10 mit einem Kanalabschnitt 20, eine Magneteinrichtung 30 und ein bewegliches Sperrglied 40, wobei das Sperrglied 40 einenends mit dem Sicherheitsbügel 8 gekoppelt ist und eine Bewegung des Sicherheitsbügels 8 auf eine sich im Flüssigkeitskanal 10 befindende magnetorheologische Flüssigkeit 11 überträgt.

Der Flüssigkeitskanal 10 ist mit der magnetorheologischen Flüssigkeit 11 befüllt, wobei die magnetorheologische Flüssigkeit 11 wenigstens zwei Bestandteile beinhaltet, nämlich eine Suspension und polarisierbare Partikel. Die Suspension kann vorzugsweise ein Mineralöl, ein synthetisches Öl, Ethylenglycol oder Wasser sein, wobei sämtliche Suspensionen verwendet werden können, welche chemisch nicht mit den polarisierbaren Partikeln und den für die Sperrvorrichtung 1 verwendeten Werkstoffen reagieren. Die polarisierbaren Partikel können Carbonyleisenpulver o.Ä. beinhalten. Die magnetorheologische Flüssigkeit kann zusätzlich Stabilisatoren beinhalten.

Der Flüssigkeitskanal 10 ist im dargestellten Ausführungsbeispiel ein in sich geschlossener Flüssigkeitskreislauf und umfasst einen Zylinder 15, in dem das als Kolben 42 ausgebildete Sperrglied 40 angeordnet ist. Der Zylinder 15 umgibt einen Druckraum 14 und der Kolben 42 unterteilt den Druckraum 14 des Zylinders 15 in einen ersten Bereich 16 und einen zweiten Bereich 17. In Abhängigkeit von der Belastung des Druckraums 14 bildet einer der Bereiche 16, 17 die Druckseite und der andere Bereich 16, 17 die Saugseite. Der erste Bereich 16 und der zweite Bereich 17 kommunizieren mittels einer Leitung 12 des Flüssigkeitskanals 10 miteinander und die magnetorheologische Flüssigkeit 11 kann durch die Leitung 12 von der Druckseite zu der Saugseite - wie in Figuren 13a bis 17 gezeigt ist - in einer ersten Fließrichtung A strömen und in einer zweiten Fließrichtung B wieder zurückfließen.

Das Sperrglied 40 ist in dem Zylinder 15 linearbeweglich gehalten und mit der im Flüssigkeitskanal 10 eingeschlossenen magnetorheologischen Flüssigkeit 11 gekoppelt. Eine Bewegung des Sicherheitsbügels 8 wird durch das Sperrglied 40 bzw. durch den Kolben 42 auf die magnetorheologische Flüssigkeit 11 übertragen, wodurch diese von der Druckseite des Kolbens 42 durch den Flüssigkeitskanal 10 bzw. durch die Leitung 12 in einer der Fließrichtungen A, B zu des Kolbens 42 verdrängt wird.

Der Kolben 42 kann eine Dichtung 44 aufweisen, welche einen Laufspalt 43 zwischen dem Kolben 42 und einer Wandung des Zylinders 15 abdichtet. Mittels einer Kolbenstange 45 ist der Kolben 42 mit dem Sicherheitsbügel 8, siehe Figur 1, der Fahrgastaufnahme 3 verbunden, wobei die Kolbenstange 45 bevorzugt koaxial in dem Zylinder 15 angeordnet ist und an einem freien Ende durch eine Öffnung des Zylinders 15 aus dem Zylinder 15 herausgeführt ist. Die Öffnung des Zylinders 15 kann ebenfalls mittels einer Dichtung abgedichtet sein, um Leckage zu verhindern.

Darüber hinaus umfasst der Flüssigkeitskanal 10 eine Druckausgleichseinrichtung 19, durch die der Druck in dem Flüssigkeitskanal 10 näherungsweise konstant gehalten werden kann.

Die Druckausgleichseinrichtung 19 kann einen Speicher aufweisen, in dem ein Druckmittel und die magnetorheologische Flüssigkeit 11 bevorratet sind. Das Druckmittel druckbeaufschlagt die magnetorheologische Flüssigkeit 11 und kann zu diesem Zweck ein kompressibles Medium, insbesondere ein Gas, noch weiter bevorzugt Stickstoff oder ein Stickstoffgemisch sein. Unterschiedliche Volumina von Druckseite zu Saugseite in dem Zylinder 15 sowie unterschiedliche Volumina aufgrund von Schwankungen in den Umgebungsbedingungen, insbesondere der Temperatur, können durch die Druckausgleichseinrichtung 19 kompensiert werden. Die Druckausgleichseinrichtung 19 kann darüber hinaus als ein Energiespeicher verwendet werden, der nach Art eines Federspeichers Energie in Form von Druck speichert und bei Bedarf wieder freigibt.

Vorliegend kann bei dem Schließen des Sicherheitsbügels 8 die magnetorheologische Flüssigkeit 11 aus dem zweiten Bereich 17 in den ersten Bereich 16 des Druckraums 14 verdrängt werden. Aufgrund der sich in dem ersten Bereich 16 befindenden Kolbenstange 45 des Kolbens 42 erfolgt eine Reduzierung des in dem Flüssigkeitskanal 11 eingeschlossenen Volumens und der Druck wird erhöht. Es wird die magnetorheologische Flüssigkeit 11 in die Druckausgleichseinrichtung 19 gedrängt und das Druckmittel, z.B. das kompressible Gas, vorgespannt. Diese Vorspannung kann zum Öffnen des Sicherheitsbügels 8 verwendet werden, wodurch der Fahrgast nach der Fahrt mit dem Vergnügungsfahrgeschäft 2 zum Aufschwenken des Sicherheitsbügels 8 weniger Kraft aufbringen muss.

Der Kanalabschnitt 20 ist in dem in Figur 2 dargestellten Ausführungsbeispiel in der Leitung 12 zwischen dem ersten Bereich 16 und dem zweiten Bereich 17 des Druckraums 14 angeordnet und kann, wie in den Figuren 13a bis 17 beispielhaft dargestellt ist, ausgestaltet sein. Dabei ist wesentlich, dass die Magneteinrichtung 30 auf zumindest zwei gegenüberliegenden Seitenwänden 21, 22 des Kanalabschnitts 20 derart angeordnet ist, dass die Feldlinien 31 des magnetischen Feldes der Magneteinrichtung 30 den Kanalabschnitt 20 durchqueren können. Zum verbesserten Verständnis sind in Figur 13b die Feldlinien 31 idealisiert in Form von Pfeillinien dargestellt.

Die Magneteinrichtung weist einen ersten Zustand und einen zweiten Zustand auf. In dem ersten Zustand der Magneteinrichtung 30 durchqueren die magnetischen Feldlinien 31 des magnetischen Felds der Magneteinrichtung 30 den Kanalabschnitt 20 und polarisieren die Partikel der magnetorheologischen Flüssigkeit 11, um diese näherungsweise quer zu den Fließrichtungen A, B in dem Kanalabschnitt 20 auszurichten.

Die polarisierten Partikel der magnetorheologischen Flüssigkeit 11 bilden aufgrund der Reluktanzkraft, oder auch Maxwellsche Kraft genannt, kettenförmige Verfestigungen, welche entlang der magnetischen Feldlinien 31 verlaufen. Die Verfestigungen führen zu einer erhöhten Viskosität bis hin zur Bildung starrer oder druckfester Verfestigungen, wodurch der Kanalabschnitt 20 in dem ersten Zustand versperrt und das bewegliche Sperrglied 40 bzw. der Kolben 42 in seiner Position festgelegt wird. Die Versperrung des Kanalabschnitts 20 kann druckfest sein und gegen Drücke von mehr als 10bar, 25bar, 50bar, 100bar, 200bar oder mehr sperren.

In dem zweiten Zustand der Magneteinrichtung 30 wird der magnetische Fluss des Magnetfeldes entweder derart umgelenkt, dass dieser nicht oder nur abgeschwächt den Kanalabschnitt 20 durchquert. Dieses kann beispielsweise durch eine Umlenkung um den Kanalabschnitt 20 mittels eines weichmagnetischen Leiters erfolgen. Alternativ kann das Magnetfeld der Magneteinrichtung 30 durch eine zweite Magneteinheit 32 - siehe Figur 13b - abgeschwächt werden. Dies kann dadurch geschehen, dass sich die Magnetfelder der Magneteinrichtung 30 und der zweiten Magneteinheit 32 zumindest im Bereich des Kanalabschnitts 20 gegenseitig aufheben bzw. abschwächen. In diesem zweiten Zustand kann die magnetorheologische Flüssigkeit 11 den Kanalabschnitt 20 ungehindert durchströmen und der Sicherheitsbügel 8 kann geöffnet werden. Ein Fahrgast kann in diesem Zustand auf der Fahrgastaufnahme 3 Platz nehmen oder nach der Fahrt mit dem Vergnügungsfahrgeschäft 2 aussteigen.

Die Magneteinrichtung 30 weist mindestens einen Permanentmagneten 35 auf, wobei besonders bevorzugt Neodym Magnete verwendet werden. Weiter ist es bevorzugt, dass die Magneteinrichtung 30 den Kanalabschnitt 20 vollständig umgibt. Die Magneteinrichtung 30 kann bei einem kreissymmetrischen Querschnitt des Kanalabschnitts 20 als Ringmagnet mit einer diametralen Magnetisierung ausgebildet sein. Durch die permanentmagnetische Magneteinrichtung 30 kann die Sperrvorrichtung 1 in Analogie zu einem Ventil "normaly closed" ausgebildet sein, wodurch sichergestellt ist, dass in einem unbetätigten ersten Zustand der Kanalabschnitt 20 gesperrt ist, und der Sicherheitsbügel 8 nicht gelöst werden kann.

Zur Betätigung der Magneteinrichtung 30 kann die zweite Magneteinheit 32 vorgesehen sein. Die zweite Magneteinheit 32 kann benachbart zu der Magneteinrichtung 30 angeordnet sein und mindestens einen Permanentmagnet 35 und/oder Elektromagnet 36 aufweisen.

Gemäß einer nicht dargestellten Ausgestaltung, kann mindestens ein Permanentmagnet der zweiten Magneteinheit 32 in Abhängigkeit von seiner Position das magnetische Feld der Magneteinrichtung 30 abschwächen oder aufheben. Zum Betätigen bzw. zum Schalten der Magneteinrichtung 30 aus dem ersten Zustand in den zweiten Zustand kann die Polung des Permanentmagneten relativ zu der Magneteinrichtung 30 verändert werden oder umgekehrt.

Der mindestens eine Elektromagnet 36 der zweiten Magneteinheit 32 kann gemäß Figur 13b bei einer Bestromung ein magnetisches Feld erzeugen, welches das magnetische Feld der Magneteinrichtung 30 in dem Kanalabschnitt 20 aufhebt oder abschwächt. Das magnetische Feld in dem Kanalabschnitt 20 kann soweit aufgehoben oder abgeschwächt werden, dass die magnetorheologischen Flüssigkeit 11 den Kanalabschnitt 20 frei durchsfließen kann.

Eine Weiterbildung der Sperrvorrichtung 1 ist in Figur 3 dargestellt. Im Unterschied zu der in Figur 2 dargestellten Ausführung ist die Druckausgleichseinrichtung 19 nicht an der Leitung 12 zwischen dem ersten Bereich 16 und dem zweiten Bereich 17 des Druckraums 14 des Zylinders 15 angeordnet, sondern in den Druckraum 14 des Zylinders 15 integriert.

Die Druckausgleichseinrichtung 19 umfasst einen Ausgleichskolben der ebenfalls beweglich in dem Zylinder 15, bevorzugt in dem ersten Bereich 16, angeordnet ist und den Druckraum 14 des Zylinders 15 in einen weiteren dritten Bereich unterteilt. Der Ausgleichskolben kann eine Dichtung aufweisen, durch die ein Laufspalt zwischen dem Ausgleichskolben und dem Zylinder 15 abgedichtet ist. Ein Speicher ist somit an einem freien Ende in dem dritten Bereich des Zylinders 15 ausgebildet, in dem das Druckmittel eingeschlossen sein kann.

Die Weiterbildung gemäß Figur 4 unterscheidet sich von den zuvor vorgestellten Ausführungen darin, dass keine Druckausgleichseinrichtung 19 vorgesehen ist und dass der Kolben 42 auf der ersten Druckseite 46 und der zweiten Druckseite 47 eine Kolbenstange 45 aufweist, welche durch den ersten Bereich 16 und den zweiten Bereich 17 durch die jeweils freien Enden des Zylinders 15 durch jeweils eine Öffnung aus dem Zylinder 15 herausgeführt werden kann.

Figur 5 zeigt eine Weiterbildung der Sperrvorrichtung 1 mit einem besonders kompakten Aufbau, wobei der Flüssigkeitskanal 10 in den Zylinder 15 bzw. das Sperrglied 40 integriert ist.

Der Kanalabschnitt 20 ist in den Kolben 42 bzw. in den Laufspalt zwischen dem Kolben 42 und dem Zylinder 15 integriert. Weiterhin ist die Magneteinrichtung 30 derart auf der dem Zylinder 15 zugewandten Außenmantelfläche des Kolbens 42 angeordnet, dass die Feldlinien des magnetischen Feldes der Magneteinrichtung 30 den Laufspalt 43 durchqueren und die Partikel der magnetorheologischen Flüssigkeit 11 quer zu dem durch den Laufspalt 43 gebildeten Kanalabschnitt 20 polarisiert werden. Im ersten Zustand der Magneteinrichtung 30 wird die Viskosität der magnetorheologischen Flüssigkeit 11 in dem Laufspalt derart erhöht, dass diese in dem Laufspalt verfestigt wird und diesen versperrt. Das als Kolben 42 ausgebildete Sperrglied 40 wird dadurch festgestellt und der Sicherheitsbügel 8 der Fahrgastaufnahme 3 wird verriegelt.

Analog zu dem Ausführungsbeispiel gemäß Figur 5 ist in Figur 6 der Flüssigkeitskanal 10 auch in den Zylinder 15 integriert. Der Laufspalt 43 zwischen den Kolben 42 und dem Zylinder 15 kann mittels einer Dichtung abgedichtet sein. Der Kanalabschnitt 20 ist innerhalb des Kolbens 42 angeordnet, und verbindet den ersten Bereich 16 und den zweiten Bereich 17 des Zylinders 15. Hierzu sind in den Kolben 42 mindestens eine, vorzugsweise mehrere Leitungen 12 zwischen der dem Zylinder 15 zugewandten Außenmantelfläche des Kolbens 42 und der Kolbenstange 45 angeordnet, wobei der Kanalabschnitt 20 in der jeweiligen Leitung 12 nach Art einer Durchgangsöffnung innerhalb des Kolbens 42 angeordnet bzw. ausgebildet ist.

Auf mindestens zwei gegenüberliegenden Seitenwänden 21, 22 des Kanalabschnitts 20 ist die Magneteinrichtung 30 angeordnet, die derart ausgebildet ist, dass die Feldlinien 31 des magnetischen Flusses der Magneteinrichtung 30 den Kanalabschnitt 20, bevorzugt quer zur Fließrichtung, durchqueren.

Eine weitere Weiterbildung der vorliegenden Sperrvorrichtung 1 kann Figur 7 entnommen werden. Die Sperrvorrichtung 1 umfasst einen Zylinder 15 mit einem im Zylinder 15 angeordneten Kolben 42, der im Gegensatz zu den bisher erläuterten Ausführungsbeispielen keine Kolbenstange 45 aufweist, sondern eine Verzahnung 48, welche zwischen der ersten Druckseite 46 und der zweiten Druckseite 47 auf der äußeren Mantelfläche des Kolbens 42 ausgebildet ist.

Der Laufspalt 43 des Kolbens 42 ist jeweils im Bereich der ersten Druckseite 46 und der zweiten Druckseite 47, bevorzugt mittels einer Dichtung, abgedichtet und der Zylinder 15 bzw. das Zylindergehäuse weist eine Aussparung auf, durch die ein Zahnrad 49 durch das Zylindergehäuse in den Zylinder 15 hineinragt und in die Verzahnung 48 eingreift. Das Zahnrad 49 ist drehbeweglich gelagert und die Wirkverbindung zwischen dem Zahnrad 49 und der Verzahnung 48 überträgt eine Drehbewegung des Zahnrads 49 in eine Linearbewegung des Kolbens 42.

Der Kolben 42 unterteilt den Zylinder 15 in die zwei Bereiche 16, 17, welche der ersten Druckseite 46 und der zweiten Druckseite 47 zugeordnet sind, wobei die beiden Bereiche 16, 17 mittels der Leitung 12 verbunden sind und in der Leitung 12 der Kanalabschnitt 20 mit der Magneteinrichtung 30 angeordnet ist.

Das Zahnrad 49 kann mit der Drehachse des Sicherheitsbügels 8 gekoppelt sein, wodurch eine Drehbewegung des Sicherheitsbügels 8 auf den Kolben 42 übertragen wird. Wenn die Feldlinien 31 des magnetischen Flusses der Magneteinrichtung 30 den Kanalabschnitt 20 durchqueren, wird der Kanalabschnitt 20 gesperrt und die magnetorheologische Flüssigkeit 11 kann nicht aus dem ersten Bereich 16 des Zylinders 15 in den zweiten Bereich 17 und umgekehrt fließen, wodurch die Lage des Kolbens 42 bzw. die Lage des Sicherheitsbügels 8 gesperrt ist und der Sicherheitsbügel 8 in seiner Position gehalten wird.

Figur 8 zeigt eine Kombination der Ausführungsbeispiele gemäß Figur 6 und Figur 7, wobei in den Kolben 42 gemäß Figur 6 die Leitung 12 mit dem Kanalabschnitt 20 derart eingearbeitet ist, dass die Leitung 12 die erste Druckseite 46 mit der zweiten Druckseite 47 des Kolbens 42 verbindet. Der Flüssigkeitskanal 10 ist daher vollständig in den Zylinder 15 integriert, wodurch die Sperrvorrichtung 1 besonders kompakt und robust ausgestaltet ist.

In Figur 9 ist eine Fahrgastaufnahme 3 mit einer Sperrvorrichtung 1 gemäß eines zweiten Ausführungsbeispiels gezeigt. Die Fahrgastaufnahme 3 weist die Sitzaufnahme 4 mit dem Sitzpolster 5 und dem Rückenpolster 6 und dem Sicherheitsbügel 8 auf, der vor dem Sitzpolster 5 angeordnet ist und eingerichtet ist, einen Fahrgast während der Fahrt mit dem Vergnügungsfahrgeschäft 2 sicher in der Fahrgastaufnahme 3 zu halten. Der Sicherheitsbügel 8 ist in der Drehachse dreh- bzw. schwenkbar an einer Halterung 7 angeordnet.

Eine Detailansicht der Sperrvorrichtung 1 gemäß Figur 9 ist in Figur 10 gezeigt, wobei der Flüssigkeitskanal 10 als Zirkularkanal 50 ausgebildet ist. Der Zirkularkanal 50 bildet den Kanalabschnitt 20 zwischen einer Innenwelle 51 und einer Außenwelle 52 aus, wobei die jeweils gegenüberliegenden Seitenwände 21 des Kanalabschnitts 20 durch die Innenwelle 51 und die Außenwelle 52 gebildet sind. Die Außenwelle 52 kann durch eine Hohlwelle oder zylindrische Ausnehmung in der Halterung 7 ausgebildet sein.

Die Innenwelle 51 bildet das Sperrglied 40 und ist exzentrisch zu der Außenwelle 52 angeordnet, wodurch der Zirkularkanal 50 über den Umfang um die Längsachse L eine veränderliche Breite aufweist. Der Kanalabschnitt 20 des Flüssigkeitskanals 10 weist aufgrund der exzentrischen Lagerung der Innenwelle 51 eine Engstelle 55 auf, die bei einer Verdrehung der Innenwelle 51 mitverlagert wird.

Der Zirkularkanal 50 ist mit der magnetorheologischen Flüssigkeit 11 gefüllt und die Magneteinrichtung 30 ist um den Flüssigkeitskanal 10 derart angeordnet, dass die Feldlinien 31 des magnetischen Feldes der Magneteinrichtung 30 den Kanalabschnitt 20 bzw. den Zirkularkanal 50 durchqueren. Die Partikel in der magnetorheologischen Flüssigkeit 11 bilden in Anwesenheit der magnetischen Feldlinien entlang der magnetischen Feldlinien kettenförmige Verfestigungen, welche bevorzugt im Wesentlichen radial verlaufen. Die Verfestigungen blockieren in dem magnetischen Feld der Magneteinrichtung keilförmig im Bereich der Engstelle 55 eine Drehung der Innenwelle 51, wodurch eine Drehung zwischen der Innenwelle 51 und der Außenwelle 52 unterbunden wird. Die Innenwelle 51 kann unmittelbar oder mittelbar mit dem Sicherheitsbügel 8 gekoppelt sein.

Eine Weiterbildung des Ausführungsbeispiels der Sperrvorrichtung 1 gemäß den Figuren 9 und 10 ist in den Figuren 11a und 11b gezeigt. Die Innenwelle 51 und die Außenwelle 52 sind in der Längsachse L koaxial zueinander angeordnet. Der Zirkularkanal 50 weist über den Umfang um die Längsachse L der Innenwelle 51 oder der Außenwelle 52 eine konstante Breite auf.

In dem Zirkularkanal 50 sind eine Vielzahl von Wälzkörper 54 angeordnet, welche nach Art eines Rollenlagers sowohl in Wirckontakt mit der Innenwelle 51 als auch in Wirkkontakt mit der Außenwelle 52 stehen und bei einer Verdrehung der Innenwelle 51 relativ zu der Außenwelle 52 eine Wälzbewegung vornehmen.

Der Zirkularkanal 50 ist mit der magnetorheologischen Flüssigkeit 11 gefüllt und die Magneteinrichtung 30 ist um den Flüssigkeitskanal 10 derart angeordnet, dass die Feldlinien 31 des magnetischen Feldes der Magneteinrichtung 30 den Kanalabschnitt 20 bzw. den Zirkularkanal 50 durchqueren. Die Partikel in der magnetorheologischen Flüssigkeit 11 bilden in der Anwesenheit der magnetischen Feldlinien entlang der magnetischen Feldlinien Verfestigungen. Wie in Figur 11b gezeigt ist, sperren die Verfestigungen die Wälzkörper 54, wodurch eine Drehung der Innenwelle 51 blockiert wird. Die Innenwelle 51 kann unmittelbar oder mittelbar mit dem Sicherheitsbügel 8 gekoppelt sein.

Figur 12a zeigt eine dritte Weiterbildung des zweiten Ausführungsbeispiels der Sperrvorrichtung 1, wobei die Innenwelle 51 und die Außenwelle 52 analog zu dem in Figur 11a und 11b dargestellten Ausführungsbeispiel koaxial zueinander ausgerichtet und gelagert gehalten sind und der Flüssigkeitskanal 10 als Zirkularkanal 50 zwischen der Innenwelle 51 und der Außenwelle 52 ausgebildet ist. Auf einer äußeren Mantelfläche 53 der Innenwelle 51 ist eine Vielzahl von Drosseln 23 angeordnet, die von der äußeren Mantelfläche 53 der Innenwelle 51 in Richtung der Außenwelle 52 abstehen. Die jeweilige Drossel 23 ist als eine Kulisse 26 ausgebildet, wobei die jeweilige Kulisse 26 aus einer ersten Flanke 26a und einer zweiten Flanke 26b gebildet ist. Die erste Flanke 26a verläuft näherungsweise tangential von der äußeren Mantelfläche 53 und die zweite Flanke 26b näherungsweise radial. Die erste Flanke 26a und die zweite Flanke 26b treffen sich in einem Punkt, der eine Engstelle 55 bildet und somit den engsten Querschnitt des Flüssigkeitskanals 10 darstellt.

Die entlang der magnetischen Feldlinien 31 des magnetischen Felds der Magneteinrichtung 30 polarisierten Partikel der magnetorheologischen Flüssigkeit 11 werden bei einer Drehung der Innenwelle 51 in eine erste Richtung gemäß Figur 10b durch die zweite Flanke wie ein Keil in den engsten Querschnitt gezwängt und sperren eine weitere Drehung in die erste Richtung A. Da hingegen wird auch in Anwesenheit des magnetischen Felds in dem Flüssigkeitskanal 10 eine Drehung in die zweite Richtung B gemäß Figur 12b nicht vollständig gesperrt, sondern lediglich gedämpft. Sobald das magnetische Feld der Magneteinrichtung 30 umgelenkt, geschwächt oder vernichtet ist, kann die Innenwelle 51 ungehindert sowohl in eine erste Richtung A' als auch in eine zweite Richtung B' verdreht werden. Somit bildet die Sperrvorrichtung 1 im ersten Zustand einen Freilauf. Der Freilauf kann beispielsweise dazu verwendet werden, um ein Verschwenken des Sicherheitsbügels 8 in die erste Richtung A' zu sperren, wobei die erste Richtung A' ein Öffnen des Sicherheitsbügels 8 bewirken würde und die zweite Richtung B ein Schließen des Sicherheitsbügels 8. Somit kann der Fahrgast während der Fahrt mit einem Vergnügungsfahrgeschäft 2 den Sicherheitsbügel 8 zwar nicht öffnen, jedoch den Sicherheitsbügel 8 nachstellen, damit dieser ihn noch fester in der Fahrgastaufnahme 3 hält.

Den Figuren 13a bis 17 sind Detaildarstellungen unterschiedlicher Ausgestaltungen des Kanalabschnitts 20 zu entnehmen. Zum besseren Verständnis sind die Detaildarstellungen teilweise mit Schaltzeichen E versehen, die eine Funktion des Kanalabschnitts 20 wiedergeben.

In den Figuren 13a und 13b ist ein Ausschnitt der Leitung 12 des Flüssigkeitskanals 10 mit dem Kanalabschnitt 20 und der Magneteinrichtung 30 dargestellt. Die Magneteinrichtung 30 ist auf mindestens zwei gegenüberliegenden Seitenwänden 21, 22 um den Kanalabschnitt 20 angeordnet, wodurch die magnetischen Feldlinien 31 des magnetischen Feldes der Magneteinrichtung 30 den Kanalabschnitt 20 durchqueren.

Die Magneteinrichtung 30 kann - wie in Figur 13b dargestellt ist - einen weichmagnetischen Eisenkreis 37 mit einem Luftspalt 38 umfassen, wobei der Kanalabschnitt 20 in dem Luftspalt 38 angeordnet ist. Die Magneteinrichtung 30 kann weiterhin mindestens einen Permanentmagneten 35 aufweisen, durch den ein magnetischer Fluss in den Eisenkreis 37 eingebracht wird, dessen Feldlinien 31 den Kanalabschnitt 20 in dem Luftspalt 38 durchqueren. Weiterhin kann eine elektrisch bestrombare Spule auf dem Eisenkreis 37 angeordnet sein, die die zweite Magneteinheit 32 bildet.

Vor und hinter dem Kanalabschnitt 20 ist ein Kegelabschnitt 25 angeordnet der eine Querschnittsverringerung bzw. Querschnittserweiterung bildet, wodurch der Kanalabschnitt 20 im Vergleich zu dem verbleibenden Leitung 12 einen reduzierten Strömungsquerschnitt aufweist, welcher bevorzugt weniger als 1/2, weiter bevorzugt weniger als 1/4, noch weiter bevorzugt weniger als 1/8 oder sogar noch weniger als 1/16 beträgt.

Die Ausgestaltung des Kanalabschnitts 20 gemäß Figur 12 weist eine Drossel 23 auf, die durch eine Kaskade gebildet ist. Durch die Kaskade wird die magnetorheologischen Flüssigkeit 11 durch einen verjüngten Querschnitt geleitet. Durch die mehrfache Umlenkung wird die effektive Länge des Kanalabschnitts 20 verlängert, wodurch die Sperrwirkung im ersten Zustand der Magneteinrichtung 30 im dem Kanalabschnitt 20 weiterhin erhöht wird.

Eine weitere Ausgestaltung des Kanalabschnitts 20 ist Figur 15 zu entnehmen, wobei der Kanalabschnitt 20 entlang der ersten Fließrichtung A eine Querschnittsverjüngung durch einen Kegelabschnitt 25 aufweist. Der Kegelabschnitt 25 verjüngt den Strömungskanal in der ersten Fließrichtung A und weitet den Strömungskanal in der zweiten Fließrichtung B auf. Diese Ausgestaltung des Kanalabschnitts 20 bildet eine Art Einwegventil. Der Kanalabschnitt 20 sperrt in der ersten Fließrichtung A, währenddessen die zweite Fließrichtung B gedämpft freigegeben ist. Dieser Effekt ist dem Umstand geschuldet, dass sich die polarisierten Partikel bzw. die durch die Partikel gebildeten Verfestigungen in dem magnetischen Feld in der zweiten Fließrichtung A durch die Keilwirkung der Düse des Kanalabschnitts 20 verstopfen bzw. versperren.

Die Magneteinrichtung 30 kann ein kegelförmig diametral magnetisierter Permanentmagnet sein, wobei die magnetischen Feldlinien leicht gekrümmt den Kanalabschnitt 20 durchqueren, wodurch die Charakteristik des Freilaufs verstärkt ist.

Eine Weiterbildung des Kanalabschnitts 20 gemäß Figur 15 ist in Figur 16 dargestellt, wobei der Kegelabschnitt 25 und/oder die Magneteinrichtung 30 in die erste Fließrichtung A oder die zweite Fließrichtung B verschiebbar ist bzw. sind. Durch die veränderliche Relativposition zwischen dem Kegelabschnitt 25 und der Magneteinrichtung 30 können die Eigenschaften des Kanalabschnitts 20 bzw. die Eigenschaften des so gebildeten Einwegventils eingestellt werden.

Auch kann ein (nicht dargestellter) beweglicher Kegelabschnitt in der magnetorheologischen Flüssigkeit 11 im inneren (durchflossenen) Bereich des Kegelabschnitts 25 angeordnet sein, der in Abhängigkeit von der Fließrichtung der magnetorheologischen Flüssigkeit 11 entweder den Kegelabschnitt 25 mechanisch verjüngt oder aus dem Kegelabschnitt 25 rausgedrückt wird, wodurch die Sperrwirkung reduziert ist. Durch den beweglichen Kegelabschnitt innerhalb des Kanalabschnitts 20 kann die Charakteristik des Einweg- bzw. Rückschlagventils verbessert werden.

Darüber hinaus kann der Kanalabschnitt 20 ein herkömmliches Hydraulikventil 70 aufweisen. Durch die Kombination des Kanalabschnitts 20 mit einem herkömmlichen Hydraulikventil 70 kann Ventilleckage durch eine Reduzierung des auf das Hydraulikventil 70 wirkenden Drucks durch den Kanalabschnitt 20 bewerkstelligt werden. Der Kanalabschnitt 20 bildet somit eine Leckageabsicherung für das Hydraulikventil 70.

### Bezugszeichenliste

- 1: Sperrvorrichtung
- 2: Vergnügungsfahrgeschäft
- 3: Fahrgastaufnahme
- 4: Sitzaufnahme
- 5: Sitzpolster
- 6: Rückenpolster
- 7: Halterung
- 8: Sicherheitsbügel
- 10: Flüssigkeitskanal
- 11: Flüssigkeit
- 12: Leitung
- 14: Druckraum
- 15: Zylinder
- 16: erster Bereich
- 17: zweiter Bereich
- 18: Fördermittel
- 19: Druckausgleichseinrichtung
- 20: Kanalabschnitt
- 21: Seitenwand
- 22: Seitenwand
- 23: Drossel
- 25: Kegelabschnitt
- 26: Kulisse
- 30: Magneteinrichtung
- 31: Feldlinien
- 32: zweite Magneteinheit
- 35: Permanentmagnet
- 36: Elektromagnet
- 37: Eisenkreis
- 38: Luftspalt
- 40: Sperrglied
- 42: Kolben
- 43: Laufspalt
- 44: Dichtung
- 45: Kolbenstange
- 46: erste Druckseite
- 47: zweite Druckseite
- 48: Verzahnung
- 49: Zahnrad
- 50: Zirkularkanal
- 51: Innenwelle
- 52: Außenwelle
- 53: Mantelfläche
- 54: Wälzkörper
- 55: Engstelle
- 70: Hydraulikventil
- A: erste Fließrichtung
- B: zweite Fließrichtung
- D: Drehachse
- L: Längsachse

## Patentansprüche

1. Fahrgastaufnahme (3) eines Fahrgeschäfts mit einem Sicherheitsbügel (8), wobei der Sicherheitsbügel (8) manuell oder durch entsprechende Stelleinheiten von der geöffneten Stellung in die geschlossene Stellung und umgekehrt bewegt werden kann und darüber hinaus ein Verriegelungssystem als Primärsicherung aufweist, wodurch der Sicherheitsbügel (8) während der Fahrt in der geschlossenen Stellung gehalten wird,
wobei für den Fall, dass die Stelleinheiten oder die Primärsicherung des Sicherheitsbügels (8) versagt, eine Sperrvorrichtung (1) als Sekundärsicherung vorgesehen ist, durch die der Sicherheitsbügel (8) in der geschlossenen Stellung gehalten wird, wobei die Sperrvorrichtung (1),einen Flüssigkeitskanal (10) mit einer magnetorheologischen Flüssigkeit (11),
ein bewegliches Sperrglied (40), und
eine Magneteinrichtung (30) aufweist,
wobei das Sperrglied (40) mit dem Sicherheitsbügel (8) gekoppelt ist und eine Bewegung des Sicherheitsbügels (8) auf die Flüssigkeit (11) in dem Flüssigkeitskanal (10) überträgt,
wobei der Flüssigkeitskanal (10) zumindest einen Kanalabschnitt (20) aufweist, und
wobei die Magneteinrichtung (30) zumindest auf gegenüberliegenden Seitenwänden (21) des Kanalabschnitts (20) derart angeordnet ist, dass die Feldlinien (31) des magnetischen Feldes der Magneteinrichtung (30) den Kanalabschnitt (20) durchqueren können,
wobei die Magneteinrichtung (30) einen ersten Zustand und einen zweiten Zustand aufweist,
wobei in dem ersten Zustand die magnetischen Feldlinien (31) den Kanalabschnitt (20) durchqueren,
wobei in dem zweiten Zustand die magnetischen Feldlinien (31) von dem Kanalabschnitt (20) abgelenkt oder umgelenkt werden, oder in dem Kanalabschnitt (20) geschwächt werden, wodurch die Viskosität der magnetorheologischen Flüssigkeit (11) im Wesentlichen unverändert bleibt und die magnetorheologische Flüssigkeit (11) näherungsweise ungestört den Kanalabschnitt (20) durch die Magneteinrichtung (30) in einer Fließrichtung durchfließen bzw. durchströmen kann wodurch der Sicherheitsbügel (8) in dem zweiten Zustand freigegeben ist und bewegt bzw. verschwenkt werden kann,
wobei die Magneteinrichtung (30) mindestens einen Permanentmagnet (35) aufweist, durch den die permanentmagnetische Magneteinrichtung (30) in dem unbetätigten ersten Zustand den Kanalabschnitt (20) sperrt, und der Sicherheitsbügel (8) nicht gelöst werden kann, und wobei in dem zweiten Zustand der Sicherheitsbügel (8) freigegeben ist, und
wobei der Flüssigkeitskanal (10) mindestens eine Druckausgleichseinrichtung (19) aufweist.

2. Fahrgastaufnahme (3) nach einem der vorgenannten Ansprüche,
**dadurch gekennzeichnet, dass**
die Magneteinrichtung (30) den Kanalabschnitt (20) ganz oder teilweise umgibt.

3. Fahrgastaufnahme (3)) nach einem der vorgenannten Ansprüche,
**dadurch gekennzeichnet, dass**
die Magneteinrichtung (30) mechanisch und/oder elektrisch schalt- oder betätigbar ist.

4. Fahrgastaufnahme (3) nach einem der vorgenannten Ansprüche,
**dadurch gekennzeichnet, dass**
die Magneteinrichtung (30) mindestens einen Elektromagnet (36) aufweist.

5. Fahrgastaufnahme (3) nach einem der vorgenannten Ansprüche,
**dadurch gekennzeichnet, dass**
der Kanalabschnitt (20) mindestens eine Drossel (23) aufweist, wodurch der Kanalabschnitt (20) des Flüssigkeitskanals (10) einen lokal reduzierten Querschnitt aufweist.

6. Fahrgastaufnahme (3) nach Anspruch 5,
**dadurch gekennzeichnet, dass**
die Drossel (23) eine Kaskade, ein Lochblech, eine Waben-, Sieb- und/oder Gitterstruktur aufweist.

7. Fahrgastaufnahme (3) nach einem der vorgenannten Ansprüche,
**dadurch gekennzeichnet, dass**
der Kanalabschnitt (20) mindestens einen Kegelabschnitt (25) in Form eines Diffusors und/oder einer Düse aufweist.

8. Fahrgastaufnahme (3) nach einem der vorgenannten Ansprüche,
**dadurch gekennzeichnet, dass**
das Sperrglied (40) einen linearbeweglichen Kolben (42) umfasst.

9. Fahrgastaufnahme (3) nach einem der vorgenannten Ansprüche,
**dadurch gekennzeichnet, dass**
der Flüssigkeitskanal (10) ein Zirkularkanal (50) ist, wobei der Zirkularkanal (50) zwischen einer Innenwelle (51) und einer Außenwelle (52) ausgebildet ist.

10. Fahrgastaufnahme (3) nach Anspruch 9,
**dadurch gekennzeichnet, dass**
die Innenwelle (51) oder die Außenwelle (52) das bewegliche Sperrglied (40) bilden und um eine Längsachse (L) verdrehbar sind.

11. Fahrgastaufnahme (3) nach einem der Ansprüche 9 oder 10
**dadurch gekennzeichnet, dass**
in dem Zirkularkanal (50) mindestens ein Wälzkörper (54) angeordnet ist.

12. Fahrgastaufnahme (3) nach einem der vorgenannten Ansprüche,
**dadurch gekennzeichnet, dass**
der Flüssigkeitskanal (10) ein Fördermittel (18) aufweist, durch das die Flüssigkeit (11) in dem Flüssigkeitskanal (10) druckbeaufschlagt zirkulieren kann.

13. Fahrgastaufnahme (3) nach einem der vorgenannten Ansprüche,
**dadurch gekennzeichnet, dass**
die magnetorheologische Flüssigkeit polarisierende Partikel, insbesondere Carbonyleisenpulver, und eine Suspension, insbesondere ein Mineralöl, ein synthetisches Öl, Ethylenglycol oder Wasser, beinhaltet.

14. Vergnügungsfahrgeschäft (2), insbesondere eine Achterbahn, ein Karussell, eine Schaukel oder eine Wasserfahrattraktion, mit einer Fahrgastaufnahme (3) nach einem der Ansprüche 1 bis 13.

## Claims

1. Passenger reception means (3) of a fairground ride, comprising a safety bar (8), wherein the safety bar (8) can be moved manually or by corresponding actuating units from the open position into the closed position and vice versa, and furthermore comprises a locking system as a primary securing means, by which the safety bar (8) is held in the closed position during the ride,
wherein for the event of the actuation units or the primary securing means of the safety bar (8) failing, a blocking device (1) is provided as a secondary securing means, by which the safety bar (8) is held in the closed position, wherein the blocking device (1) comprises a fluid channel (10) with a magnetorheological fluid (11), a movable blocking member (40), and a magnet device (30), wherein the blocking member (40) is coupled to the safety bar (8) and transmits a movement of the safety bar (8) to the fluid (11) in the fluid channel (10),
wherein the fluid channel (10) comprises at least one channel portion (20), and
wherein the magnet device (30) is arranged at least on opposing side walls (21) of the channel portion (20) in such a way that the field lines (31) of the magnetic field of the magnet device (30) can cross the channel portion (20),
wherein the magnet device (30) has a first state and a second state,
wherein in the first state the magnetic field lines (31) cross the channel portion (20),
wherein in the second state the magnetic field lines (31) are diverted or deflected from the channel portion (20) or are attenuated in the channel portion (20), as a result of which the viscosity of the magnetorheological fluid (11) remains substantially unchanged and the magnetorheological fluid (11) can flow virtually undisturbed through the channel portion (20) through the magnet device (30) in a flow direction, as a result of which the safety bar (8) is released in the second state and can be moved or pivoted, wherein the magnet device (30) comprises at least one permanent magnet (35) by which the permanently magnetic magnet device (30) blocks the channel portion (20) in the non-actuated first state, and the safety bar (8) cannot be released, and
wherein in the second state the safety bar (8) is released, and
wherein the fluid channel (10) comprises at least one pressure compensation means (19).

2. Passenger reception means (3) according to any of the preceding claims,
**characterised in that**
the magnet device (30) surrounds the channel portion (20) entirely or in part.

3. Passenger reception means (3) according to any of the preceding claims,
**characterised in that**
the magnet device (30) can be switched or actuated manually and/or electrically.

4. Passenger reception means (3) according to any of the preceding claims,
**characterised in that**
the magnet device (30) comprises at least one electromagnet (36).

5. Passenger reception means (3) according to any of the preceding claims,
**characterised in that**
the channel portion (20) comprises at least one throttle (23), as a result of which the channel portion (20) of the fluid channel (10) has a locally reduced cross-section.

6. Passenger reception means (3) according to claim 5,
**characterised in that**
the throttle (23) comprises a cascade, a perforated metal plate, a honeycomb, sieve and/or grating structure.

7. Passenger reception means (3) according to any of the preceding claims,
**characterised in that**
the channel portion (20) comprises at least one conical portion (25) in the form of a diffuser and/or a nozzle.

8. Passenger reception means (3) according to any of the preceding claims,
**characterised in that**
the blocking member (40) comprises a linearly movable piston (42).

9. Passenger reception means (3) according to any of the preceding claims,
**characterised in that**
the fluid channel (10) is a circular channel (50), wherein the circular channel (50) is formed between an inner shaft (51) and an outer shaft (52).

10. Passenger reception means (3) according to claim 9,
**characterised in that**
the inner shaft (51) or the outer shaft (52) form the movable blocking member (40) and can be twisted about a longitudinal axis (L).

11. Passenger reception means (3) according to either claim 9 or claim 10,
**characterised in that**
at least one rolling element (54) is arranged in the circular channel (50).

12. Passenger reception means (3) according to any of the preceding claims,
**characterised in that**
the fluid channel (10) comprises a conveying means (18) by which the fluid (11) can circulate in the fluid channel (10) in a pressurised manner.

13. Passenger reception means (3) according to any of the preceding claims,
**characterised in that**
the magnetorheological fluid contains polarising particles, in particular carbonyl iron powder, and a suspension, in particular a mineral oil, a synthetic oil, ethylene glycol or water.

14. Fairground ride (2), in particular a rollercoaster, a merry-go-round, a swing, or a water ride attraction, comprising a passenger reception means (3) according to any of claims 1 to 13.

## Revendications

1. Logement (3) de passager d'un manège comprenant un étrier (8) de sécurité, dans lequel l'étrier (8) de sécurité peut passer, manuellement ou par des unités de réglage adéquates, de la position ouverte à la position fermée et inversement et a en outre un système de verrouillage comme sécurité primaire, grâce à quoi l'étrier (8) de sécurité est maintenu pendant la circulation dans la position fermée,
dans lequel, dans le cas où les unités de réglage ou la sécurité primaire de l'étrier (8) de sécurité est défaillante, il est prévu un dispositif (1) de blocage comme sécurité secondaire, par lequel l'étrier (8) de sécurité est maintenu dans la position fermée, dans lequel le dispositif (1) de blocage a un conduit (10) pour du liquide ayant un liquide (11) magnétorhéologique,
un organe (40) mobile de blocage et
un dispositif (30) magnétique,
dans lequel l'organe (40) de blocage est accouplé à l'étrier (8) de sécurité et transmet un déplacement de l'étrier (8) de sécurité au liquide (11) dans le conduit (10) pour du liquide
dans lequel le conduit (10) pour du liquide a au moins un tronçon (20) de conduit, et
dans lequel le dispositif (30) magnétique est disposé au moins sur des parois (21) latérales opposées du tronçon (20) de conduit, de manière à ce que les lignes (31) de champ du champ magnétique du dispositif (30) magnétique puissent traverser le tronçon (20) de conduit,
dans lequel le dispositif (30) magnétique a un premier état et un deuxième état,
dans lequel, dans le premier état, les lignes (31) du champ magnétique traversent le tronçon (20) de conduit,
dans lequel, dans le deuxième état, les lignes (31) du champ magnétique sont déviées ou renvoyées du tronçon (20) de conduit ou sont affaiblis dans le tronçon (20) de conduit, grâce à quoi la viscosité du liquide (11) magnétorhéologique reste sensiblement inchangée et le liquide (11) magnétorhéologique peut, à peu près sans perturbation, passer dans le tronçon (20) de conduit par le dispositif (30) magnétique dans un sens d'écoulement, grâce à quoi l'étrier (8) de sécurité est libéré dans le deuxième état et peut se déplacer ou pivoter,
dans lequel le dispositif (30) magnétique a au moins un aimant (35) permanent, par lequel le dispositif (30) magnétique à magnétisme permanent barre, dans le premier état non actionné, le tronçon (20) de conduit et l'étrier (8) de sécurité ne peut pas être défait et dans lequel, dans le deuxième état, l'étrier (8) de sécurité est libéré, et dans lequel le conduit (10) pour du liquide a au moins un dispositif (19) de compensation de la pression.

2. Logement (3) de passager suivant l'une des revendications précédentes,
**caractérisé en ce que**
le dispositif (30) magnétique entoure en tout ou partie le tronçon (20) du conduit.

3. Logement (3) de passager suivant l'une des revendications précédentes,
**caractérisé en ce que**
le dispositif (30) magnétique peut être commuté ou actionné mécaniquement et/ou électriquement.

4. Logement (3) de passager suivant l'une des revendications précédentes,
**caractérisé en ce que**
le dispositif (30) magnétique a au moins un électro-aimant (36).

5. Logement (3) de passager suivant l'une des revendications précédentes,
**caractérisé en ce que**
le tronçon (20) du conduit a au moins un étranglement (23), grâce à quoi le tronçon (20) du conduit (10) pour du liquide a une section transversale réduite localement.

6. Logement (3) de passager suivant la revendication 5,
**caractérisé en ce que**
l'étranglement (23) a une cascade, une tôle perforée, une structure en nid d'abeille, en tamis et/ou en grille.

7. Logement (3) de passager suivant l'une des revendications précédentes,
**caractérisé en ce que**
le tronçon (20) du conduit a au moins un tronçon (25) conique sous la forme d'un diffuseur et/ou d'une buse.

8. Logement (3) de passager suivant l'une des revendications précédentes,
**caractérisé en ce que**
l'organe (40) de blocage comprend un piston (42) mobile linéairement.

9. Logement (3) de passager suivant l'une des revendications précédentes,
**caractérisé en ce que**
le conduit (10) pour du liquide est un conduit (50) circulaire, dans lequel le conduit (50) circulaire est constitué entre un arbre (51) intérieur et un arbre (52) extérieur.

10. Logement (3) de passager suivant la revendication 9,
**caractérisé en ce que**
l'arbre (51) intérieur ou l'arbre (52) extérieur forment l'organe (40) de blocage mobile et peuvent tourner autour d'un axe (L) longitudinal.

11. Logement (3) de passager suivant l'une des revendications 9 ou 10,
**caractérisé en ce qu'**
au moins un corps (54) de roulement est disposé dans le canal (50) circulaire.

12. Logement (3) de passager suivant l'une des revendications précédentes,
**caractérisé en ce que**
le conduit (10) pour du liquide a un moyen (18) de refoulement, par lequel le liquide (11) peut circuler sous l'effet de la pression dans le conduit (10) pour du liquide.

13. Logement (3) de passager suivant l'une des revendications précédentes,
**caractérisé en ce que**
le liquide magnétorhéologique contient des particules de polarisation, en particulier de la poudre de fer carbonyle, et une suspension, en particulier une huile minérale, une huile synthétique, de l'éthylène glycol ou de l'eau.

14. Manège (2) d'attraction, en particulier une montagne russe, un manège de chevaux de bois, un manège balançoire ou une attraction aquatique ayant un logement (3) de passager suivant l'une des revendications 1 à 13.
